# EUROPÄISCHE PATENTANMELDUNG

(11) **EP 0 827 819 A1**
(43) Veröffentlichungstag der Anmeldung: **11.03.1998**
(21) Anmeldenummer: 97113178.4
(22) Anmeldetag: 31.07.1997
(51) Int. Cl.: B28B 11/14, B28B 11/24, B28B 1/50

(54) **Verfahren zum Herstellen von Bauelementen wie insbesondere Steine, Platten oder dergleichen und eine dazu geeignete Sägemaschine**

(30) Priorität: 10.09.1996 DE 19636671
(71) Anmelder: DORSTENER MASCHINENFABRIK AKTIENGESELLSCHAFT, D-46284 Dorsten (DE)
(72) Erfinder: Lütkenhorst, Günter, 46282 Dorsten (DE)
(74) Vertreter: Honke, Manfred, Dr.-Ing.

(57) **Zusammenfassung**

Es handelt sich um ein Verfahren zum Herstellen von Steinen aus Porenbeton, wonach ein schnittfester Betonblock hergestellt und mittels Horizontalschnitte und Vertikalschnitte auf das jeweilige Steinformat geschnitten wird. Im Rahmen der Erfindung wird der Betonblock nach dem Vertikalschneiden in grünem Zustand gehärtet und erst nach dem Härten horizontal geschnitten, so daß ein Verkleben der Steine verhindert wird, wie es dann zu befürchten ist, wenn die Vertikalschnitte vor dem Härten erfolgen.

## Beschreibung

Die Erfindung betrifft ein Verfahren zum Herstellen von Bauelementen wie insbesondere Steine, Platten oder dergleichen aus Porenbeton oder dergleichen Baustoffe, wonach ein schnittfester Betonblock mittels einer Gießform hergestellt und nach dem Entformen in einer Schneidelinie mittels Horizontalschnitte und Vertikalschnitte auf das jeweilige Steinformat geschnitten wird.

Im Zuge der Herstellung von insbesondere Steinen aus Porenbeton finden regelmäßig Gießformen Verwendung. Nach dem Füllen der jeweiligen Gießform mit Porenbeton und Entstehen eines schnittfesten Kuchens bzw. Betonblocks wird die Gießform zu einer Schneidelinie transportiert und entfernt. Anschließend erfolgt eine Bearbeitung des sich noch im grünen Zustand befindenden Betonblocks in der Schneidelinie. Dort wird der Betonblock mittels eines Seitenschneiders, einer Längssäge und einer Quersäge auf die jeweiligen Steinformate geschnitten. Anschließend erfolgt ein Härten der auf diese Weise erzeugten Steine. Problematisch in diesem Zusammenhang ist die Tatsache, daß Bemühungen dahingehen, das Gewicht der aus Porenbeton bestehenden Steine zu reduzieren. Folglich weist der Porenbeton eine geringere Rohdichte und im grünen Zustand eine erhöhte Wasseraufnahme auf. Das hat die nachteilige Folge, daß die Steine nach dem Schneiden des im grünen Zustand befindlichen Betonblocks im Bereich der in horizontaler Ebene geführten Längsschnitte dazu neigen, aufeinander zu kleben. Aus diesem Grunde hat man bereits Brechanlagen eingesetzt, um die aufeinandergeklebten Steine nach dem Härten auseinander zu brechen. Das ist nicht nur in anlagetechnischer Hinsicht aufwendig, sondern führt auch zu Produktionsausschuß, weil bei einer derartigen Trennbehandlung häufig auch die Steinkanten ausbrechen und die Steinoberflächen unsauber sind. - Hier will die Erfindung Abhilfe schaffen.

Der Erfindung liegt die Aufgabe zugrunde, ein Verfahren zum Herstellen von Bauelementen anzugeben, wonach sich insbesondere Steine, Platten oder dergleichen in leichtgewichtiger Ausführungsform unter Verzicht auf einen nachträglichen Brechvorgang in einwandfreien Formaten herstellen lassen.

Diese Aufgabe löst die Erfindung bei einem gattungsgemäßen Verfahren dadurch, daß der Betonblock nach dem Vertikalschneiden im grünen Zustand gehärtet wird und erst nach dem Härten horizontal geschnitten wird. In diesem Zusammenhang ist nach einer bevorzugten Ausführungsform der Erfindung vorgesehen, daß der Betonblock nach dem Querschneiden in vertikaler Ebene im grünen Zustand gehärtet wird und nach dem Härten um 90° gedreht und- in vertikaler Ebene längs geschnitten wird. - Im Ergebnis werden also die Vertikalschnitte vor dem Härten durchgeführt, während die Horizontalschnitte - bzw. nach 90° Drehung Vertikalschnitte - erst nach dem Härten vorgenommen werden. In diesem Zusammenhang geht die Erfindung von der Erkenntnis aus, daß die Vertikalschnitte unproblematisch sind, weil insoweit ein Aneinanderkleben der Steine selbst aus verhältnismäßig leichtem Porenbeton nicht zu befürchten ist. Insoweit kommt es vielmehr entscheidend auf die Horizontalschnitte an, weil dann die auf das entsprechende Steinformat geschnittenen Steine mit ihren aufeinanderliegenden Steinflächen verkleben können. Ein derartiges Verkleben der Steine wird nach Lehre der Erfindung dadurch ausgeschlossen, daß die Horizontalschnitte - bzw. nach 90° Drehung Vertikalschnitte - erst nach dem Härten vorgenommen werden und nach dem Härten die Gefahr des Verklebens bzw. Anbackens der benachbarten Horizontalflächen aufeinanderliegender Steine nicht mehr besteht. Insoweit wird im Rahmen der Erfindung die rationelle und funktionsgerechte Herstellung von Bauelementen und insbesondere Steinen, Platten oder dergleichen selbst aus verhältnismäßig leichtem Porenbeton in einwandfreien und formgerechten Formaten ohne Kanten- und Oberflächenbeschädigung gewährleistet.

Im Rahmen der Erfindung besteht die Möglichkeit, für das Horizontalschneiden des Betonblocks nach dem Härten bzw. zum Längsschneiden des Betonblocks in vertikaler Ebene nachdem der Betonblock um 90° gedreht worden ist, dafür geeignete Sägen, wie beispielsweise Bandsägen, Kreissägen oder dergleichen, einzusetzen. Dann muß allerdings für jeden Horizontalschnitt bzw. Längsschnitt in vertikaler Ebene eine eigene Säge eingesetzt werden oder müssen diese Schnitte nacheinander erfolgen. Aus diesem Grunde schlägt die Erfindung vor, und diesem Vorschlag kommt selbständige Bedeutung zu, eine Sägemaschine zur Durchführung des erfindungsgemäßen Verfahrens einzusetzen, welche gekennzeichnet ist durch eine Langsäge mit einem Sägegatter mit mehreren auf- und abgehenden oder hin- und hergehenden Sägeblättern, die in durch das jeweilige Steinformat vorgegebenen Abständen in einem Gatterrahmen eingespannt sind und durch Führungen für den auf den Führungen gleitenden Gatterrahmen durch einen Kurbelantrieb für den Gatterrahmen sowie durch einen Vorschub für den zu schneidenden bzw. zu sägenden Betonblock. Eine derartige Sägemaschine bzw. Gattersäge ermöglicht das synchrone Horizontalschneiden bzw. in vertikaler Ebene Längsschneiden des Betonblocks für sämtliche Sägeschnitte, die erforderlich sind, um aus dem gehärteten Betonblock Steine unter Einhaltung des jeweiligen Steinformates herzustellen. Vorzugsweise weist die Langsäge ein Rahmengestell mit Vertikalführungen für den Gatterrahmen auf und ist der Kurbelantrieb für den Gatterrahmen auf dem Rahmengestell angeordnet. Dabei kann der Gatterrahmen Querstäbe und auf den Querstäben verschiebbar gelagerte und in vorgegebenen Abständen fixierbare Angeln zum Einspannen der Sägeblatter aufweisen. Insoweit lassen sich also die Sägeblätter auf das jeweils gewünschte Steinformat einstellen. Um eine einwandfreie Führung des Gatterrahmens zu erreichen, weist der Gatterrahmen zweckmäßigerweise seitliche die als Führungsstangen ausgebildeten Vertikalsführungen umfassende Führungsbuchsen bzw. - augen auf. Bei einem rechteckigen Gatterrahmen sind diese Führungsbuchsen in den oberen und unteren Eckbereichen angeordnet. Weiter sieht die Erfindung vor, daß vor und hinter der Langsäge bzw. dem Sägegatter Transporteinrichtungen, zum Beispiel Rollgänge oder Transportbänder für den Betonblock und die daraus erzeugten Steine angeordnet sind, um einen einwandfreien An- und Abtransport sowie Vorschub zu erreichen. In diesem Zusammenhang lehrt die Erfindung, daß der dem Sägegatter vorgeordneten Transporteinrichtung ein Schubschild als Vorschub für den Betonblock zugeordnet ist. Grundsätzlich kann im Rahmen der Erfindung ein taktweiser aber auch kontinuierlicher Vorschub verwirklicht werden. Endlich lehrt die Erfindung, daß oberhalb der Transporteinrichtungen Niederhalter, zum Beispiel über Trommeln umlaufende Endlosbänder für einerseits den Betonblock, andererseits die daraus erzeugten Steine angeordnet sind, die auch nach dem Zersägen des Betonblocks auf das jeweilige Steinformat in blockartiger Anordnung abtransportiert werden.

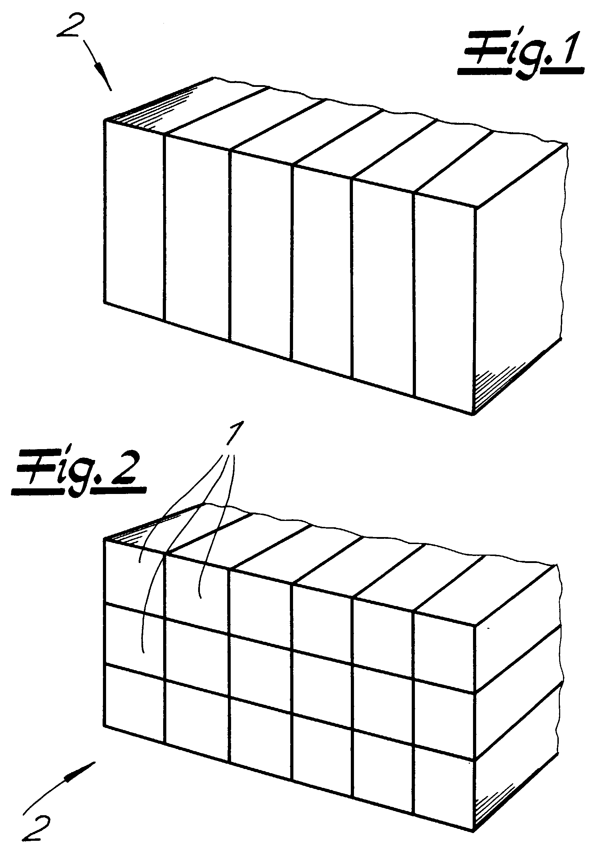

Im folgenden wird die Erfindung anhand einer lediglich ein Ausführungsbeispiel darstellenden Zeichnung näher erläutert; es zeigen
- Fig. 1: ausschnittsweise und in perspektivischer Darstellung einen lediglich vertikal geschnittenen Betonblock vor dem Härtevorgang,
- Fig. 2: den Gegenstand nach Fig. 1 nach dem Härten und Horizontalschneiden zur Erzeugung von Steinen in vorgegebenem Steinformat,
- Fig. 3: in schematischer Darstellung eine Sägemaschine in Frontansicht, mit einem um 90° gedrehten Betonblock zum Längsschneiden in vertikaler Ebene und
- Fig. 4: den Gegenstand nach Fig. 3 in Seitenansicht.

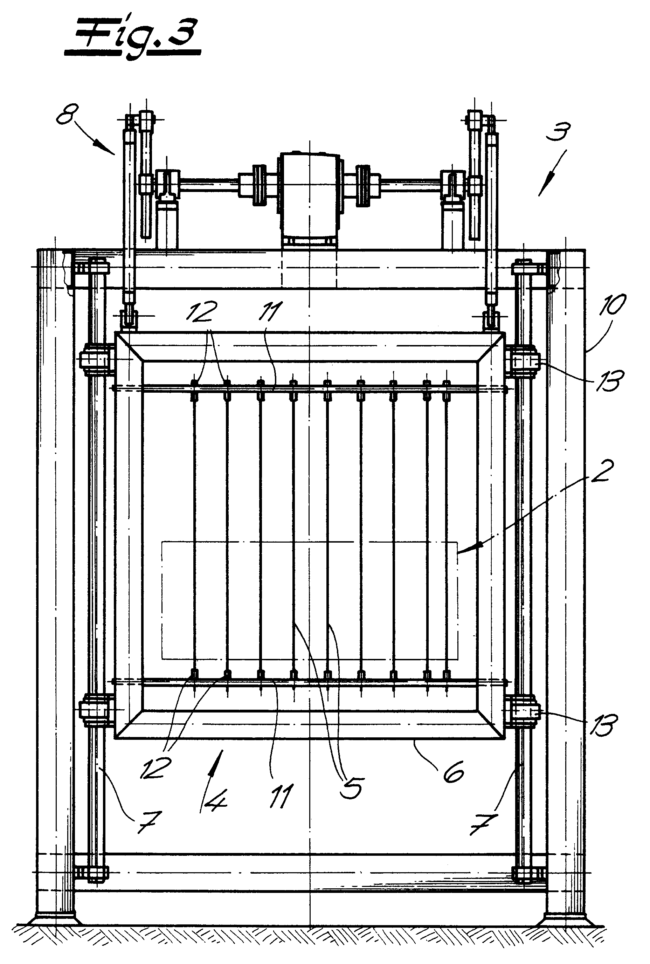

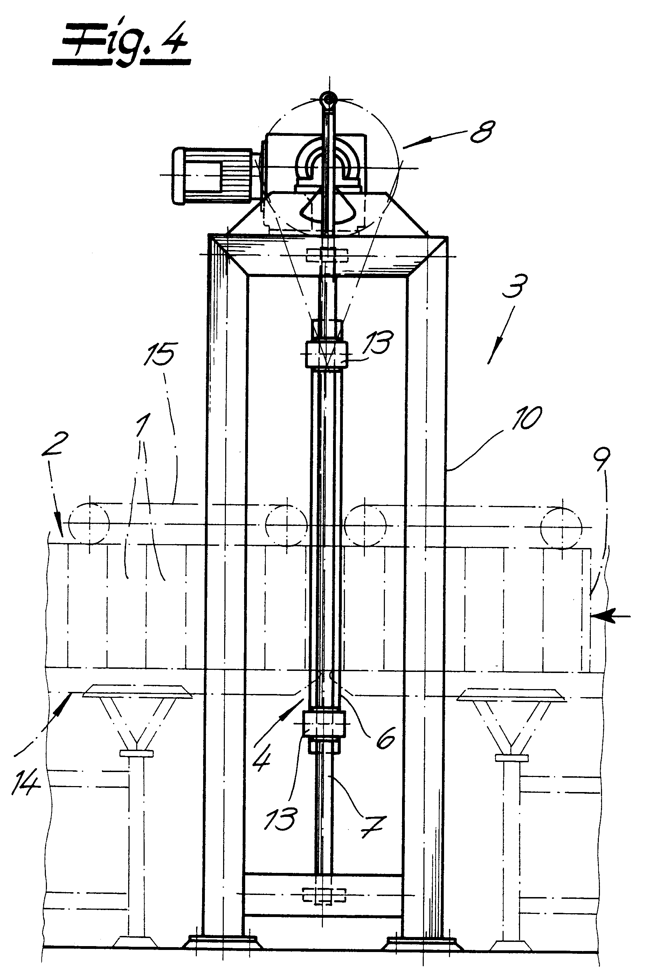

In den Figuren ist eine Sägemaschine dargestellt, die zum herstellen von Bauelementen und insbesondere Steinen 1 aus Porenbeton dient. Dazu wird ein Betonblock 2 der zuvor im grünen Zustand in vertikaler Ebene quer geschnitten worden ist nach dem Härten um 90° gedreht, antransportiert und in vertikaler Ebene längs geschnitten. Anschließend werden die auf diese Weise erzeugten Steine 1 unter Beibehaltung einer blockartigen Anordnung abtransportiert. Der um 90° gedrehte Betonblock 2 ist in den Figuren 3 und 4 andeutungsweise dargestellt.

Die Sägemaschine ist als Langsäge 3 mit einem Sägegatter 4 mit mehreren auf- und abgehenden Sägeblättern 5 ausgeführt. Die Sägeblätter 5 sind in durch das jeweilige Steinformat vorgegebenen Abständen in einem Gatterrahmen 6 eingespannt. Ferner sind Führungen 7 für den Gatterrahmen 6 vorgesehen, auf denen der Gatterrahmen 6 gleitet. Der Gatterrahmen ist an einen Kurbelantrieb 8 zur Erzeugung von auf- und abgehenden Bewegungen angeschlossen. Außerdem ist ein Vorschub 9 für den zu schneidenden bzw. sägenden Betonblock 2 verwirklicht, der lediglich angedeutet ist. Nach dem Ausführungsbeispiel weist die Langsäge 3 ein Rahmengestell 10 mit Vertikalführungen 7 für den Gatterrahmen 6 auf, wobei der Kurbelantrieb 8 für den Gatterrahmen 6 auf dem Rahmengestell 10 angeordnet ist. Im Rahmen der Erfindung besteht grundsätzlich auch die Möglichkeit, Horizontalführungen für den Gatterrahmen vorzusehen und den Kurbelantrieb in Horizontalebene an den Gatterrahmen anzuschließen, wobei dann auch die Sägeblätter in Horizontalebene verlaufen und folglich Horizontalschnitte durch den Betonblock nach dem Härten geführt werden kann, so daß der Betonblock vor dem Längsschneiden in Horizontalebene nicht um 90° gedreht werden muß.

Nach dem dargestellten Ausführungsbeispiel weist der Gatterrahmen 6 Querstäbe 11 und auf den Querstäben 11 verschiebbar gelagerte und in vorgegebenen Abständen fixierbare Angeln 12 zum Einspannen der Sägeblätter 5 auf. Der Gatterrahmen 6 besitzt seitlich die als Führungsstangen ausgebildeten Vertikalführungen 7 umfassende Führungsbuchsen 13 bzw. -augen. Vor und hinter der Längssäge 3 bzw. dem Sägegatter 4 sind Transporteinrichtungen 14, zum Beispiel Rollgänge oder Transportbänder für den Betonblock 2 und die daraus erzeugten Steine 1 angeordnet. Der dem Sägegatter 4 vorgeordneten Transporteinrichtung ist ein Schubschild 9 als Vorschub für den Betonblock 2 zugeordnet. Oberhalb der Transporteinrichtungen 14 sind Niederhalter 15, zum Beispiel über Trommeln umlaufende Endlosbänder für den Betonblock 2 bzw. die daraus erzeugten und blockartiger Anordnung abzutransportierenden Steine 1 angeordnet.

## Patentansprüche

1. Verfahren zum Herstellen von Bauelementen wie insbesondere Steine, Platten oder dergleichen aus Porenbeton oder dergleichen Baustoffe, wonach ein schnittfester Betonblock mittels einer Gießform hergestellt und nach dem Entformen in einer Schneidelinie mittels Horizontalschnitte und Vertikalschnitte auf das jeweilige Steinformat geschnitten wird, **dadurch gekennzeichnet**, daß der Betonblock nach dem Vertikalschneiden in grünem Zustand gehärtet wird und nach dem Härten horizontal geschnitten wird.

2. Verfahren nach Anspruch 1, dadurch gekennzeichnet, daß der Betonblock nach dem Querschneiden in vertikaler Ebene im grünen Zustand gehärtet wird und nach dem Härten um 90° gedreht und in vertikaler Ebene längs geschnitten wird.

3. Sägemaschine zur Durchführung des Verfahrens nach Anspruch 1 oder 2, gekennzeichnet durch eine Langsäge (3) mit einem Sägegatter (4) mit mehreren auf- und abgehenden Sägeblättern (5), die in durch das jeweilige Steinformat vorgegebenen Abständen in einem Gatterrahmen (6) eingespannt sind, und durch Führungen (7) für den auf den Führungen gleitenden Gatterrahmen (6), durch einen Kurbelantrieb (8) für den Gatterrahmen (6) sowie durch einen Vorschub (9) für den zu schneidenden bzw. zu sägenden Betonblock (2).

4. Sägemaschine nach Anspruch 3, dadurch gekennzeichnet, daß die Langsäge (3) ein Rahmengestell (10) mit Vertikalführungen (7) für den Gatterrahmen (6) aufweist und der Kurbelantrieb (8) für den Gatterrahmen (6) auf dem Rahmengestell (10) angeordnet ist.

5. Sägemaschine nach Anspruch 3 oder 4, dadurch gekennzeichnet, daß der Gatterrahmen (6) Querstäbe (11) und auf den Querstäben (11) verschiebbar gelagerte und in vorgegebenen Abständen fixierbare Angeln (12) zum Einspannen der Sägeblätter (5) aufweist.

6. Sägemaschine nach einem der Ansprüche 3 bis 5, dadurch gekennzeichnet, daß der Gatterrahmen (6) seitliche die als Führungsstangen ausgebildeten Vertikalführungen (7) umfassende Führungsbuchsen (13) aufweist.

7. Sägemaschine nach einem der Ansprüche 3 bis 6, dadurch gekennzeichnet, daß vor und hinter der Langsäge (3) bzw. dem Sägegatter (4) Transporteinrichtungen (14), zum Beispiel Rollgänge oder Transportbänder für den Betonblock (2) und die daraus erzeugten Steine angeordnet sind.

8. Sägemaschine nach einem der Ansprüche 3 bis 7, dadurch gekennzeichnet, daß der dem Sägegatter (4) vorgeordneten Transporteinrichtung ein Schubschild (9) als Vorschub für den Betonblock (2) zugeordnet ist.

9. Sägemaschine nach einem der Ansprüche 3 bis 8, dadurch gekennzeichnet, daß oberhalb der Transporteinrichtungen (14) Niederhalter (15), zum Beispiel über Trommeln umlaufende Endlosbänder für den Betonblock (2) bzw. die daraus erzeugten Steine (1), angeordnet sind.
